# EUROPÄISCHE PATENTANMELDUNG

(11) **EP 1 310 402 A2**
(43) Veröffentlichungstag der Anmeldung: **14.05.2003**
(21) Anmeldenummer: 02023442.3
(22) Anmeldetag: 19.10.2002
(51) Int. Cl.: B60N 2/36

(54) **Personenkraftwagen mit Fondsitzbank**

(30) Priorität: 09.11.2001 DE 10155218
(71) Anmelder: DaimlerChrysler AG, 70567 Stuttgart (DE)
(72) Erfinder: Behrends, Hagen, 71065 Sindelfingen (DE); Henke, Dieter, 71034 Böblingen (DE); Löper, Bernd, 71409 Schwaikheim (DE)

(57) **Zusammenfassung**

Die vorliegende Erfindung betrifft einen Personenkraftwagen, insbesondere einen Kleinwagen, der mit einer Fondsitzbank (9) ausgestattet ist, die eine Rückenlehne und ein Sitzkissen aufweist. Rückenlehne (12,13) und Sitzkissen (14,15) sind jeweils in ein 1/3-Teil und ein 2/3-Teil unterteilt. Die Sitzkissenteile sind unabhängig voneinander und unabhängig von den Rückenlehnenteilen nach vorn hochklappbar, wobei sie jeweils einen Stauraum freigeben. Die Rückenlehnenteile sind unabhängig voneinander nach vorn abklappbar und im Stauraum des jeweiligen zugeordneten Sitzkissenteils ablegbar. Das 2/3-Sitzkissenteil (15) ist ausbaubar ausgestaltet. Hinter der Fondsitzbank (9) ist ein Laderaum mit einem höhenverstellbaren Ladeboden (17) angeordnet, der zwischen einer unteren Stellung, in welcher sich der Ladeboden etwa auf der Höhe eines Fahrzeugbodens (20) befindet, und einer oberen Stellung verstellbar ist, in welcher zwischen dem Ladeboden und dem Fahrzeugboden ein Hilfsstauraum (18) ausgebildet ist. Dieser Hilfsladeraum ist so dimensioniert, daß darin das ausgebaute 2/3-Sitzkissenteil (15) unterbringbar ist.

## Beschreibung

Die vorliegende Erfindung betrifft einen Personenkraftwagen mit einer Fondsitzbank, die eine Rückenlehne und ein Sitzkissen aufweist, wobei Rückenlehne und Sitzkissen jeweils in ein 1/3-Teil und ein 2/3-Teil unterteilt sind.

Bei einer auf diese Weise teilbaren Fondsitzbank können die Sitzkissenteile unabhängig voneinander und unabhängig von den Rückenlehnenteilen nach vorn hochgeklappt werden, wobei die hochgeklappten Sitzkissenteile dann jeweils einen Stauraum freigeben. Nach dem Hochklappen der Sitzkissenteile sind die Rückenlehnenteile unabhängig voneinander nach vorn abklappbar, wobei sie im Stauraum des jeweils zugeordneten und zuvor hochgeklappten Sitzkissenteils ablegbar sind. Ein hinter der Fondsitzbank angeordneter Laderaum kann durch die auf diese Weise umklappbare Fondsitzbank nach vorn verlängert werden. Allerdings ist der auf diese Weise vergrößerbare Laderaum des Fahrzeugs durch die hochgeklappten Sitzkissenteile nach vorn begrenzt, so daß, insbesondere bei Kleinwagen, die Unterbringung von längeren Gegenständen im Laderaum erschwert ist.

Aus der DE 42 37 258 C2 ist ein Personenkraftwagen bekannt, der hinter den Fondsitzen einen Laderaum mit einem Laderaumboden aufweist. An diesem Laderaumboden ist hinter den Fondsitzen eine zusätzliche Fondsitzbank mit einer Rücklehne und einem Sitzkissen angeordnet. Die Rückenlehne ist nach vorn auf die Sitzbank abklappbar. Hinter dieser zusätzlichen Fondsitzbank enthält der Laderaumboden eine Vertiefung. Bei abgeklappter Rückenlehne ist das Sitzkissen der zusätzlichen Fondsitzbank nach hinten wegklappbar und in der Vertiefung verstaubar. Eine Unterseite des Sitzkissens bildet dann einen ebenen und bündig anschließenden Bestandteil des Laderaumbodens.

Aus der DE 14 35 537 U ist es bekannt, in einen Personenkraftwagen die Fondsitzbank nach vorn in den Fußraum des Fondbereichs zu verschwenken, wobei außerdem die Rückenlehne nach vorn auf das Sitzkissen abgeklappt wird. In der Gebrauchsstellung der Fondsitzbank liegt die Unterseite des Sitzkissens auf einer Auflagefläche auf. Bei in den Fondfußraum eingeschwenkter Fondsitzbank bildet die Unterseite des Sitzkissens zusammen mit der Auflagefläche eine Ebene.

Die DE 44 31 248 C1 zeigt eine Rücksitzbank, die aus einem Personenkraftwagen ausbaubar ist. Zu diesem Zweck ist die Fondsitzbank über lösbare Verankerungsstellen am Innenraumboden befestigt. Die aus dem Fahrzeug ausgebaute Sitzbank muß dann an einer geeigneten Stelle außerhalb des Fahrzeugs, z.B. in einer Garage, gelagert werden, was häufig als umständlich und aufwendig empfunden wird.

Die vorliegende Erfindung beschäftigt sich mit dem Problem, für einen Personenkraftwagen der eingangs genannten Art eine Ausführungsform anzugeben, die den Transport längerer Gegenständen im Fahrzeug vereinfacht.

Dieses Problem wird erfindungsgemäß durch einen Personenkraftwagen mit den Merkmalen des Anspruchs 1 gelöst. Vorteilhafte Ausführungsformen sind Gegenstand der abhängigen Ansprüche.

Die Erfindung beruht auf dem allgemeinen Gedanken, zumindest das 2/3-Sitzkissenteil lösbar bzw. ausbaubar auszubilden und zur Unterbringung des ausgebauten 2/3-Sitzkissenteils im Laderaum einen dafür vorgesehenen Hilfsstauraum vorzusehen. Auf diese Weise kann das ausgebaute Sitzkissenteil im Fahrzeug raumsparend untergebracht und mitgeführt werden. Durch den Ausbau des 2/3-Sitzkissens kann der Laderaum zusätzlich nach vorn verlängert werden, wodurch die Unterbringung großer, sperriger Gegenstände im Laderaum erleichtert wird.

Von besonderer Bedeutung ist hierbei der höhenverstellbare Ladeboden, der in seiner abgesenkten unteren Stellung bei nicht benötigtem Hilfsstauraum ein maximales Ladevolumen gewährleistet. Bei in seine angehobene obere Stellung verstelltem Ladeboden wird vom Gesamtladevolumen der zur Unterbringung des 2/3-Sitzkissenteils benötigte Hilfsstauraum abgetrennt. Diese Bauweise gewährleistet, daß der für die Unterbringung des 2/3-Sitzkissenteils erforderliche Stauraum mit wenigen Handgriffen zur Verfügung steht, wobei der verbleibende Laderaum ohne Beeinträchtigung durch das 2/3-Sitzkissenteil beladbar ist. Es ist klar, daß der Ladeboden sowohl in seiner unteren Stellung als auch in seiner oberen Stellung voll zur Beladung nutzbar ist.

Von besonderem Vorteil ist eine Ausführungsform, bei der das abgeklappte Rücklehnenteil mit seiner Rückseite an den in seine obere Stellung verstellten Ladeboden im wesentlichen stufenlos anschließt und diesen in den Fondbereich hinein im wesentlichen eben nach vorn verlängert. Bei dieser Bauweise wird der für die Beladung des Laderaums wichtige Ladeboden vergrößert, wodurch insgesamt die Nutzbarkeit des Laderaums vergrößert wird.

Zweckmäßig kann der Ladeboden in seiner oberen Stellung im wesentlichen stufenlos an eine Ladekante einer den Laderaum nach hinten begrenzenden Heckbordwand des Fahrzeugs anschließen. Bei dieser Ausführungsform wird das Be- und Entladen des Laderaums bzw. des Ladebodens erheblich vereinfacht, wenn der Ladeboden in seine obere Stellung verstellt ist.

Bei einer anderen Weiterbildung kann der Ladeboden einen Deckel aufweisen oder als Deckel ausgebildet sein, mit dem der Hilfsstauraum verschließbar ist, wobei der Hilfsstauraum dann so dimensioniert ist, daß er auch bei darin untergebrachtem 2/3-Sitzkissenteil mit dem Deckel ordnungsgemäß verschließbar ist, wenn sich der Ladeboden in seiner oberen Stellung befindet. Durch diese Bauweise wird gewährleistet, daß das ausgebaute und im Hilfsstauraum untergebrachte 2/3-Sitzkissenteil die Beladbarkeit des Ladebodens nicht beeinträchtigt.

Bei einer besonders vorteilhaften Ausführungsform kann auch das 1/3-Sitzkissenteil ausbaubar sein, wobei dann der Fahrzeugboden unterhalb des höhenverstellbaren Ladebodens eine Vertiefung enthält, die so dimensioniert ist, daß darin das ausgebaute 1/3-Sitzkissenteil so unterbringbar ist, daß im Hilfsstauraum das 2/3-Sitzkissenteil ordnungsgemäß, insbesondere mit ordnungsgemäß verschließbarem Deckel, unterbringbar ist. Bei dieser Ausführungsform kann somit der Laderaum auch im Bereich des 1/3-Sitzkissenteils vergrößert werden.

Bei einer Weiterbildung kann die im Fahrzeugboden für die Unterbringung des 1/3-Sitzkissenteils vorgesehene Vertiefung auch so dimensioniert sein, daß darin anstelle des 1/3-Sitzkissenteils ein Reserverad des Personenkraftwagens unterbringbar ist, ohne dadurch die Verstaubarkeit des 2/3-Sitzkissenteils im Hilfsstauraum zu behindern. Hierdurch erhält die Vertiefung eine Doppelfunktion, so daß alternativ das Reserverad oder das 1/3-Sitzkissenteil darin verstaubar ist.

Bei einer anderen Weiterbildung kann die Vertiefung so dimensioniert sein, daß der Ladeboden auch dann ordnungsgemäß in seine untere Stellung absenkbar ist, wenn das ausgebaute 1/3-Sitzkissenteil oder das Reserverad in der Vertiefung untergebracht ist. Diese Bauweise gewährleistet, daß der Stauraum bei abgesenktem Ladeboden maximal nutzbar ist.

Zweckmäßig kann der Personenkraftwagen einen Beifahrersitz mit Rückenlehne und Sitzkissen aufweisen, wobei das Sitzkissen nach vorn hochklappbar ist und dabei einen Stauraum freigibt, in dem die nach vorn abklappbare Rückenlehne ablegbar ist, wobei die abgeklappte Rückenlehne mit ihrer Rückseite an das abgeklappte Rückenlehnenteil im wesentlichen stufenlos anschließt und den Laderaumboden in den Beifahrerbereich hinein im wesentlichen eben nach vorn verlängert. Auch diese Maßnahme ermöglicht eine zusätzliche Vergrößerung des Laderaums, insbesondere eine Verlängerung des Laderaumbodens, wodurch die Raumausnutzung im Fahrzeuginnenraum zusätzlich verbessert wird.

Zur Komfortsteigerung kann es zweckmäßig sein, die Rückenlehne des Beifahrersitzes nach vorn umlegbar und auf das in seiner Gebrauchsstellung befindliche Sitzkissen auflegbar auszugestalten, wobei sich dann die Rückseite der umgelegten Rückenlehne im wesentlichen parallel zum Laderaumboden auf einem dem gegenüber erhöhten Niveau erstreckt. In dieser Klapposition kann die Rückseite der Beifahrersitzrückenlehne als Tisch verwendet werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert, wobei sich gleiche Bezugszeichen auf gleiche oder funktional gleiche oder ähnliche Bauteile beziehen. Es zeigen, jeweils schematisch,
- Fig. 1: eine perspektivische Ansicht auf einen teilweise geschnittenen Personenkraftwagen nach der Erfindung,
- Fig. 2: eine stark vereinfachte Schnittansicht im Heckbereich des Personenkraftwagens nach Fig. 1 bei angehobenem Ladeboden und
- Fig. 3: eine Ansicht wie in Fig. 2, jedoch bei abgesenktem Ladeboden.

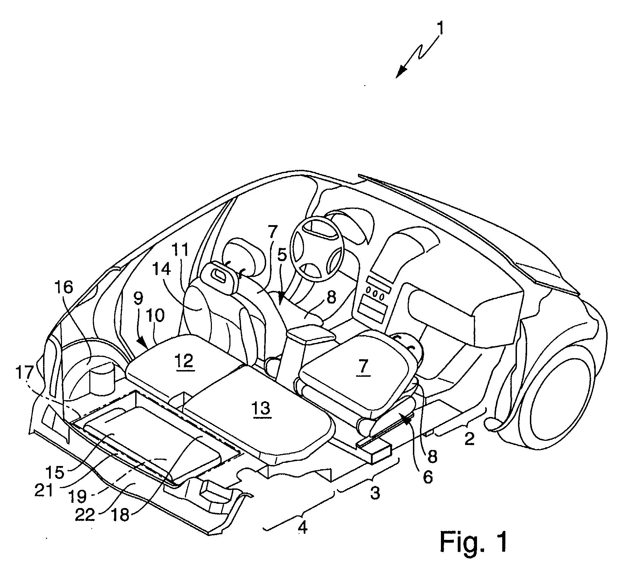

Entsprechend Fig. 1 weist ein Personenkraftwagen 1, der vorzugsweise als Kleinwagen ausgebildet ist, in seinem Innenraum von vorn nach hinten einen durch eine geschweifte Klammer gekennzeichneten Frontraumbereich 2, einen durch eine geschweifte Klammer gekennzeichneten Fondraumbereich 3 und einen durch eine geschweifte Klammer gekennzeichneten Laderaumbereich 4 auf. Im Frontraumbereich 2 sind ein Fahrersitz 5 und ein Beifahrersitz 6 angeordnet, die jeweils eine Rücklehne 7 und ein Sitzkissen 8 aufweisen. Im Fondraumbereich 3 ist eine teilbare Fondsitzbank 9 angeordnet, die ebenfalls eine Rückenlehne 10 und ein Sitzkissen 11 aufweist. Die Rückenlehne 10 ist in ein 1/3-Rückenlehnenteil 12 und ein 2/3-Rückenlehnenteil 13 unterteilt. In der gleichen Weise ist auch das Sitzkissen 11 in ein 1/3-Sitzkissen 14 und ein 2/3-Sitzkissen 15 unterteilt.

Die Sitzkissenteile 14 und 15 sind unabhängig voneinander und unabhängig von den Rückenlehnenteilen 12 und 13 nach vorn hochklappbar. In Fig. 1 ist das 1/3-Sitzkissenteil 14 in seine nach vorn hochgeklappte Position verstellt. Das 2/3-Sitzkissenteile 15 ist außerdem ausbaubar angeordnet, also lösbar im Bereich seiner Schwenkachse verankert. In Fig. 1 ist das 2/3-Sitzkissenteil 15 bereits ausgebaut. Des weiteren sind die Rückenlehnenteile 12 und 13 unabhängig voneinander nach vorn abklappbar, wobei sie jeweils in einen Stauraum einschwenken, der sich beim Hochklappen der Sitzkissenteile 14 und 15 ausbildet.

Im Laderaumbereich 4 ist hinter der Fondsitzbank 9 ein Laderaum 16 ausgebildet. Dieser Laderaum 16 enthält einen Ladeboden 17, der relativ zu einem Fahrzeugboden 22 höhenverstellbar gelagert ist. Eine entsprechende Lagerung und Führung, insbesondere eine Kulissenführung, kann auf herkömmlich Weise ausgebildet sein und muß daher nicht näher erläutert werden.

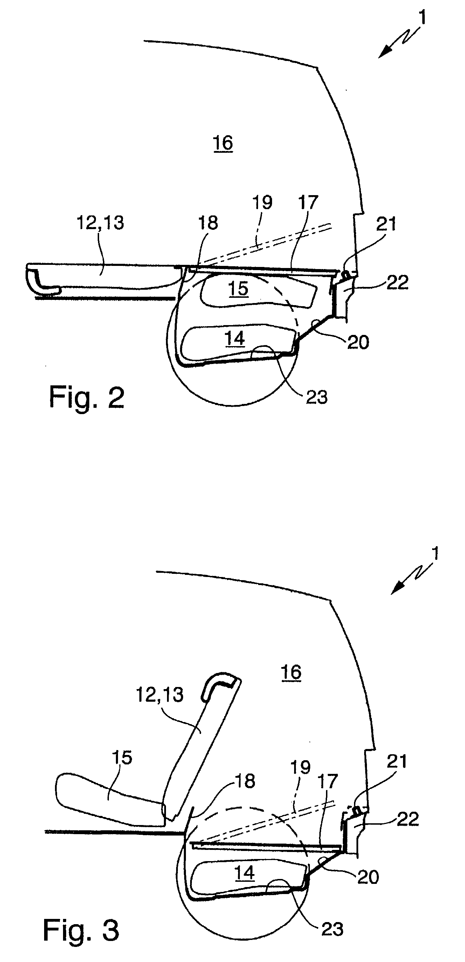

Bezugnehmend auf die Fig. 2 und 3 kann der Ladeboden 17 zwischen einer in Fig. 2 gezeigten angehobenen oberen Stellung und einer in Fig. 3 gezeigten abgesenkten unteren Stellung verstellt werden. Während der Ladeboden 17 in seiner unteren Stellung auf dem Fahrzeugboden 20 aufliegt und sich somit etwa auf der Höhe des Fahrzeugbodens 20 befindet, ist in der oberen Stellung des Ladebodens 17 zwischen dem Fahrzeugboden 20 und dem Ladeboden 17 ein Hilfsstauraum 18 ausgebildet. Dieser Hilfsstauraum 18 ist so dimensioniert, daß darin das ausgebaute 2/3-Sitzkissenteil 15 unterbringbar ist. In den Darstellungen der Fig. 1 und 2 ist das 2/3-Sitzkissenteil 15 bereits im Hilfsstauraum 18 verstaut. Überlicherweise ist der Hilfsstauraum 18 mit einem Deckel 19 verschließbar. Dieser Deckel 19 kann dabei durch den Ladeboden 17 selbst gebildet sein. Ebenso kann der Ladeboden 17 den Deckel 19 aufweisen, der in geschlossenem Zustand einen großflächigen Bestandteil des Ladebodens 17 bildet. Die Dimensionierung des Hilfsstauraums 18 ist so auf die Dimensionen des 2/3-Sitzkissenteils 15 abgestimmt, daß der Hilfsstauraum 18 auch bei darin untergebrachten 2/3-Sitzkissenteil 15 mit dem Deckel 19 ordnungsgemäß verschließbar ist. Das bedeutet z.B., daß der Deckel 19 auch dann als beladbarer Bestandteil des Ladebodens 17 verwendbar ist.

Entsprechend Fig. 2 ist der Laderaum 16 bezüglich der Fahrtrichtung nach hinten durch eine Heckbordwand 22 begrenzt. Diese Heckbordwand 22 weist oben eine Ladekante 21 auf. Vorteilhaft ist der Ladeboden 17 so ausgestaltet, dass er in seiner oberen Stellung im wesentlichen stufenlos, also bündig, an die Ladekante 21 anschließt. Durch diese Bauweise wird das Be- und Entladen des angehobenen Ladebodens 17 erheblich vereinfacht.

Gemäß Fig. 1 und 2 bilden die Rückseiten der Rückenlehnenteile 12 und 13 zweckmäßig eine Verlängerung des angehobenen Ladebodens 17 in den Fondraumbereich 3 hinein, wenn die Rückenlehnenteile 12 und 13 nach vorn abgeklappt und in den von den Sitzkissenteilen 14 und 15 freigegebenen Stauraum abgelegt sind. Die Rückseiten der Rückenlehnenteile 12 und 13 schließen sich dabei im wesentlichen stufenlos an den Ladeboden 17 an und bilden mit diesem eine Ebene, die besonders einfach zu beladen ist.

Zweckmäßig kann auch die Rückenlehne 7 des Beifahrersitzes 6 nach vorn umlegbar ausgebildet sein, wobei die Rückenlehne 7 dann auf das Sitzkissen 8 auflegbar ist, das sich noch in seiner Gebrauchsstellung befindet. Bei dieser Klappsituation erstreckt sich die Rückseite der umgelegten Rückenlehne 7 im wesentlichen parallel zum Ladeboden 17, wobei sich diese Rückseite allerdings auf einem gegenüber dem Ladeboden 17 erhöhten Niveau befindet. Durch diese Klappsituation kann die Beladbarkeit des Fahrzeugs 1 zusätzlich vergrößert werden. Darüber hinaus kann der so umgeklappte Beifahrersitz 6 auch als Tisch dienen.

Zweckmäßig kann der Beifahrersitz 6 auch so ausgebildet, daß sein Sitzkissen 8 nach vorn hochklappbar ist und dabei einen Stauraum freigibt, in dem die nach vorn abklappbare Rückenlehne 7 ablegbar ist. Bei dieser Klappsituation wird die Rückseite der Rückenlehne 7 auf einem niedrigeren Niveau positioniert, das etwa dem Niveau des Laderaumbodens 17 entspricht. Diese Kinematik des Beifahrersitzes 6 ermöglicht eine weitere Vergrößerung des zur Verfügung stehenden Laderaums, wobei hier von besonderem Vorteil ist, daß sich die abgeklappte Rückenlehne 7 mit ihrer Rückseite an das abgeklappte 2/3-Rückenlehnenteil 13 im wesentlichen stufenlos anschließt. Darüber hinaus verlängert die Rückseite der abgeklappten Rückenlehne 7 des Beifahrersitzes 6 den Laderaumboden 17 über den Fondraumbereich 3 hinaus in den Frontraumbereich 2 bzw. in den Beifahrerbereich hinein, wobei sich auch hier die Rückseite der Rückenlehne 7 im wesentlichen eben und parallel zum Laderaumboden 17 erstreckt.

Von besonderem Vorteil ist entsprechend den Fig. 2 und 3 eine Ausführungsform, bei welcher der Fahrzeugboden 22 unterhalb des für die Unterbringung des 2/3-Sitzkissenteils 15 vorgesehenen Hilfsstauraums 18 eine Vertiefung 23 enthält. Diese Vertiefung 23 kann zum einen so dimensioniert sein, daß darin ein Reserverad des Personenkraftwagens 1 unterbringbar ist, ohne daß dadurch die ordnungsgemäße Unterbringung des 2/3-Sitzkissenteils 15 im Hilfsstauraum 18 behindert wird. Alternativ oder zusätzlich kann diese Vertiefung 23 auch so dimensioniert sein, daß darin das 1/3-Sitzkissenteil 14 derart unterbringbar ist, daß im Hilfsstauraum 18 nach wie vor das 2/3-Sitzkissenteil 15 ordnungsgemäß verstaubar ist. Zu diesem Zweck ist dann auch das 1/3-Sitzkissenteil 14 ausbaubar ausgestaltet, also lösbar am Fahrzeug befestigt.

Gemäß Fig. 3 ist die Vertiefung 23 zweckmäßig so dimensioniert, daß darin auch dann das Reserverad oder das 1/3-Sitzkissenteil 14 unterbringbar ist, wenn der Ladeboden 17 in seine untere Stellung abgesenkt ist.

Der besondere Nutzen des erfindungsgemäßen Personenkraftwagens 1 wird vor allem darin gesehen, daß das zur Vergrößerung des Laderaums 16 bzw. des Ladebodens 17 ausbaubare 2/3-Sitzkissenteil 15 sowie gegebenenfalls auch das 1/3-Sitzkissenteil 14 im Fahrzeug 1 in einem speziell dafür vorgesehenen Stauraum unterbringbar sind, nämlich im Hilfsstauraum 18 bzw. in der vorstehend genannten Vertiefung 23 im Fahrzeugboden 20. Diese Bauweise ermöglicht es, das jeweilige ausgebaute Sitzkissenteil 14 und/oder 15 im Fahrzeug 1 mitzuführen, ohne daß dadurch die Beladbarkeit des Laderaums 16 oder des Ladebodens 17 beeinträchtigt wird.

## Patentansprüche

1. Personenkraftwagen, insbesondere Kleinwagen, mit einer Fondsitzbank (9) und mit folgenden Merkmalen:
- die Fondsitzbank (9) weist eine Rückenlehne (10) und ein Sitzkissen (11) auf,
- die Rücklehne (9) ist in ein 1/3-Rückenlehnenteil (12) und ein 2/3-Rückenlehnenteil (13) unterteilt,
- das Sitzkissen (11) ist in ein 1/3-Sitzkissenteil (14) und ein 2/3-Sitzkissenteil (15) unterteilt,
- die Sitzkissenteile (14,15) sind unabhängig voneinander und unabhängig von den Rückenlehnenteilen (12,13) nach vorn hochklappbar, wobei die Sitzkissenteile (14,15) jeweils einen Stauraum freigeben,
- die Rückenlehnenteile (12,13) sind unabhängig voneinander nach vorn abklappbar und im Stauraum des jeweils zugeordneten Sitzkissenteils (14,15) ablegbar,
- das 2/3-Sitzkissenteil (15) ist ausbaubar ausgebildet,
- ein hinter der Fondsitzbank (9) angeordneter Laderaum (16) weist einen höhenverstellbaren Ladeboden (17) auf,
- der Ladeboden (17) ist zwischen einer abgesenkten unteren Stellung, in welcher sich der Ladeboden (17) etwa auf der Höhe eines Fahrzeugsbodens (20) befindet, und einer angehobenen oberen Stellung verstellbar, in der zwischen dem Ladeboden (17) und dem Fahrzeugboden (20) ein Hilfsstauraum (18) ausgebildet ist,
- der Hilfsstauraum (18) ist so dimensioniert, daß darin das ausgebaute 2/3-Sitzkissenteil (15) unterbringbar ist.

2. Personenkraftwagen nach Anspruch 1,
**dadurch gekennzeichnet,**
**daß** das abgeklappte Rückenlehnenteil (12, 13) mit seiner Rückseite an den in seine obere Stellung verstellten Ladeboden (17) im wesentlichen stufenlos anschließt und diesen in einen der Fondsitzbank (9) zugeordneten Fondraumbereich (3) hinein im wesentlichen eben nach vorn verlängert.

3. Personenkraftwagen nach Anspruch 1 oder 2,
**dadurch gekennzeichnet,**
**daß** der Ladeboden (17) in seiner oberen Stellung im wesentlichen stufenlos an eine Ladekante (21) einer den Laderaum (16) nach hinten begrenzten Heckbordwand (22) anschließt.

4. Personenkraftwagen nach einem der Ansprüche 1 bis 3,
**dadurch gekennzeichnet,**
**daß** der Ladeboden (17) einen Deckel (19) aufweist oder daß der Ladeboden (17) als Deckel (19) ausgebildet ist, mit dem der Hilfsstauraum (18) verschließbar ist, wobei der Hilfsstauraum (18) so dimensioniert ist, daß der Hilfsstauraum (18) auch bei darin untergebrachtem 2/3-Sitzkissenteil (15) mit dem Deckel (19) ordnungsgemäß verschließbar ist, wenn sich der Ladeboden (17) in seiner oberen Stellung befindet.

5. Personenkraftwagen nach einem der Ansprüche 1 bis 4,
**dadurch gekennzeichnet,**
**daß** das 1/3-Sitzkissenteil (14) ausbaubar ist und daß der Fahrzeugboden (20) unterhalb des Ladebodens (17) und unterhalb des Hilfsstauraums (18) eine Vertiefung (23) enthält, die so dimensioniert ist, daß darin das ausgebaute 1/3-Sitzkissenteil (14) so unterbringbar ist, daß zusätzlich im Hilfsstauraum (18) das 2/3-Sitzkissenteil (15) ordnungsgemäß unterbringbar ist.

6. Personenkraftwagen nach Anspruch 5,
**dadurch gekennzeichnet,**
**daß** die Vertiefung (23) so dimensioniert ist, daß darin anstelle des 1/3-Sitzkissenteils (14) ein Reserverad des Personenkraftwagens (1) so unterbringbar ist, daß zusätzlich im Hilfsstauraum (18) das 2/3-Sitzkissenteil (15) ordnungsgemäß unterbringbar ist.

7. Personenkraftwagen nach Anspruch 5 oder 6,
**dadurch gekennzeichnet,**
**daß** die Vertiefung (23) so dimensioniert ist, daß der Ladeboden (17) auch dann ordnungsgemäß in seine untere Stellung absenkbar ist, wenn das ausgebaute 1/3-Sitzkissenteil (14) oder das Reserverad in der Vertiefung (23) untergebracht ist.

8. Personenkraftwagen nach einem der Ansprüche 1 bis 7,
**dadurch gekennzeichnet,**
**daß** der Personenkraftwagen (1) einen Beifahrersitz (6) mit Rückenlehne (7) und Sitzkissen (8) aufweist, wobei das Sitzkissen (8) nach vorn hochklappbar ist und dabei einen Stauraum freigibt, in dem die nach vorn abklappbare Rückenlehne (7) ablegbar ist, wobei die abgeklappte Rückenlehne (7) mit ihrer Rückseite an das benachbarte abgeklappte Rückenlehnenteil (13) der Fondsitzbank (9) im wesentlichen stufenlos anschließt und den Ladeboden (17) in einen dem Beifahrersitz (6) zugeordneten Beifahrerbereich (2) hinein im wesentlichen eben nach vorn verlängert.

9. Personenkraftwagen nach Anspruch 8,
**dadurch gekennzeichnet,**
**daß** die Rückenlehne (7) des Beifahrersitzes (6) nach vorn umlegbar und auf das in seiner Gebrauchsstellung befindliche Sitzkissen (8) des Beifahrersitzes (6) auflegbar ist, wobei sich die Rückseite der umgelegten Rückenlehne (7) im wesentlichen parallel zum Ladeboden (17) auf einem dem gegenüber erhöhten Niveau erstreckt.
